# EUROPEAN PATENT APPLICATION

(11) **EP 4 134 351 A1**
(43) Date of publication of application: **15.02.2023**
(21) Application number: 22189475.1
(22) Date of filing: 09.08.2022
(51) Int. Cl.: C01B 35/04, C25B 1/00

(54) **PRODUCTION OF METAL BORIDES IN POWDER FORM VIA MOLTEN SALT ELECTROLYSIS**

(30) Priority: 12.08.2021 TR 202112771
(71) Applicant: Istanbul Teknik Universitesi, 34469 Istanbul (TR); HITIT UNIVERSITESI REKTORLUGU, CORUM (TR)
(72) Inventor: TIMUR, SERVET IBRAHIM, ISTANBUL (TR); KARTAL SIRELI, GULDEM, ISTANBUL (TR); DARYAL, MEHMET BARIS, ISTANBUL (TR); KARTAL, LEVENT, CORUM (TR)
(74) Representative: Berkkam, Ayfer

(57) **Abstract**

The present invention relates to a method that allows to obtain the transition metal borides without the need for using halides. The method developed with the invention allows specifically the production of metal borides in powder form in different sizes via molten salt electrolysis. Described also is control of powder particle sizes.

## Description

### Technical Field

The present invention relates to a method allowing the production of transition metal borides in different powder sizes without the need for using halides.

### Prior Art

Various metal boride coatings can be applied to metal surfaces for purposes such as increasing thermal and chemical resistance and hardness and regulating thermal and electrical conductivity. These can be applied by means of chemical deposition on the respective surface, carbothermic or metallothermic reactions, physical deposition using the desired metal boride in power form, and infiltration. Carbothermic and metallothermic methods generate products contaminated with carbide and oxide and entail processes to remove them. On the other hand, chemical deposition causes high-cost and low-rate production.

The halide salts of boron and the desired metal are also commonly utilized to produce metal borides. However, because of the effects on human health and the environment of halogens released due to the use of these compounds, it is necessary to develop alternatives to the use of halide salts.

In the article titled "Electrodeposition of titanium diboride from oxide based melts" (Ozkalafat Perim, Kartal Sireli Güldem, Timur Servet Ibrahim (2016). Electrodeposition of titanium diboride from oxide-based melts. Surface and Coatings Technology, 308, 128-135., Doi: 10.1016/j.surfcoat.2016.05.089), obtaining a titanium diboride coating by depositing titanium and boron together on a metal matrix with electrolysis of a melt comprising borax and sodium titanate is disclosed.

In document No. US2741587A the production of refractory metal boride powders is disclosed. It was mentioned that, for that, desired metal oxides are used with boric anhydrate or borates. A barrier placed between the anode and the cathode was used for producing powdered metal borides.

In document No. GB1415423A an electrolytic method using molten salts for coating materials (iron, steel, carbide material) comprising at least 0.05% carbon on their surfaces with TiB₂ is disclosed. It was mentioned that, for that, boron oxides such as boric anhydrate and alkali borates can be used as a boron source, and titanium, and alloys, oxides, or halides thereof as a titanium source. Examples of titanium oxides include the salts they form with alkali metals. With this document, it is aimed to eliminate the need for complex equipment and processes and the use of protective media.

In documents No. US3697390A and US3827954A, alkali metal borates, and alkali and alkaline earth metal salts of the respective metal oxide are used to obtain titanium, zirconium, and hafnium boride coatings.

In document No. US2015060288A1 the use of sodium borate to form boride on a surface is disclosed. It was mentioned that in the case of a different metal from the base material on the surface, said metal and boride are formed successively.

In document No. CN102203327A the production of boron-containing thin films and multilayer structures based thereon is disclosed. With this method, it was mentioned that various metals (for example, Al, Co, Cr, Cu, Fe, Ni, Ir, Mn, Mo, Nb, Pd, Pt, Ru, Ta, Ti, V, W, Y, Zr) can be treated and they can have complex shapes. It was stated that boron oxides, halides, and alkali and alkaline earth salts thereof can be used as a boron source.

In the article titled "Synthesis of group IV and V metal diboride nanocrystals via borothermal reduction with sodium borohydride" (Zoli, L, Galizia, P, Silvestroni, L, Sciti, D. J Am Ceram Soc. 2018; 101: 2627- 2637.), the interaction of sodium borohydride (NaBH₄) with group IV and V transition metal oxides to form the respective diborides was studied. It was suggested that Na-metal-O and Na-B-O intermediate species are formed and from these, respective metal borides are formed.

### Objects of the Invention

The main object of the present invention is to synthesize targeted metal borides or mixed metal borides from electrolyte composition containing respective metals and boron source compounds, but not halides via molten salt electrolysis by a cathodic reduction in a single process step.

Another object of the present invention is to develop a method allowing the production of metal borides, including basic metals, without the need for using a protective atmosphere.

Another object of the present invention is to develop a method that allows to produce the metal borides with low cost, ease of application, and high production rate and that is suitable for industrial-scale applications.

Yet another object of the present invention is to develop a method allowing the production of metal borides in different powder sizes.

### Detailed Description of the Invention

The method developed to achieve the objects of the present invention is shown in the attached figures.
- **Figure 1**: XRD graphs of TiB₂ samples obtained at different temperatures according to the invention.
- **Figure 2a**: SEM image of a TiB₂ sample obtained at a temperature of 800 °C according to the invention.
- **Figure 2b**: SEM image of a TiB₂ sample obtained at a temperature of 900 °C according to the invention.
- **Figure 2c**: SEM image of a TiB₂ sample obtained at a temperature of 1000 °C according to the invention.
- **Figure 2d**: SEM image of a TiB₂ sample obtained at a temperature of 1100 °C according to the invention.
- **Figure 2e**: SEM image of a TiB₂ sample obtained at a temperature of 1200 °C according to the invention.

The metal boride production method according to the invention, is essentially a molten salt electrolysis method. The boron source is selected from borates of an alkali or alkaline earth metal. The boron source also serves as an electrolyte. On the other hand, the metal source is selected from the oxides, sulphides, sulfates, nitrates, and borates of the metal, from which borides will be produced, and the salts containing them, the carbonates and hydroxides, thermal decomposition outputs of which form the respective oxides, and the salts containing them and mixtures thereof. Both the boron source and metal source compounds are selected from the non-halide ones.

With the invention, metal borides in powder form can be produced. Particularly titanium diboride (TiB₂) can be produced. On the other hand, borides of other transition group metals can be produced, particularly zircon and hafnium, according to the invention.

For that, a current density at a temperature from 800 to 1200 °C and preferably being 50 to 1000 mA/cm², particularly 500 mA/cm² is used. In the exemplary embodiment of the invention, some experiments were performed with molten mixtures containing sodium tetraborate (Na₂B₄O₇), titanium dioxide (TiO₂), and sodium hydroxide (NaOH), molar ratios of which are 10-90%, preferably 45%, 1-50%, preferably 18%, and 1-50%, preferably 37%, respectively. In the exemplary embodiment of the invention, even though the mentioned current densities are used, the current density can be at any level exceeding 50 mA/cm². The invention can also be carried out by using zirconium dioxide (ZrO₂) or hafnium dioxide (HfO₂) instead of TiO₂.

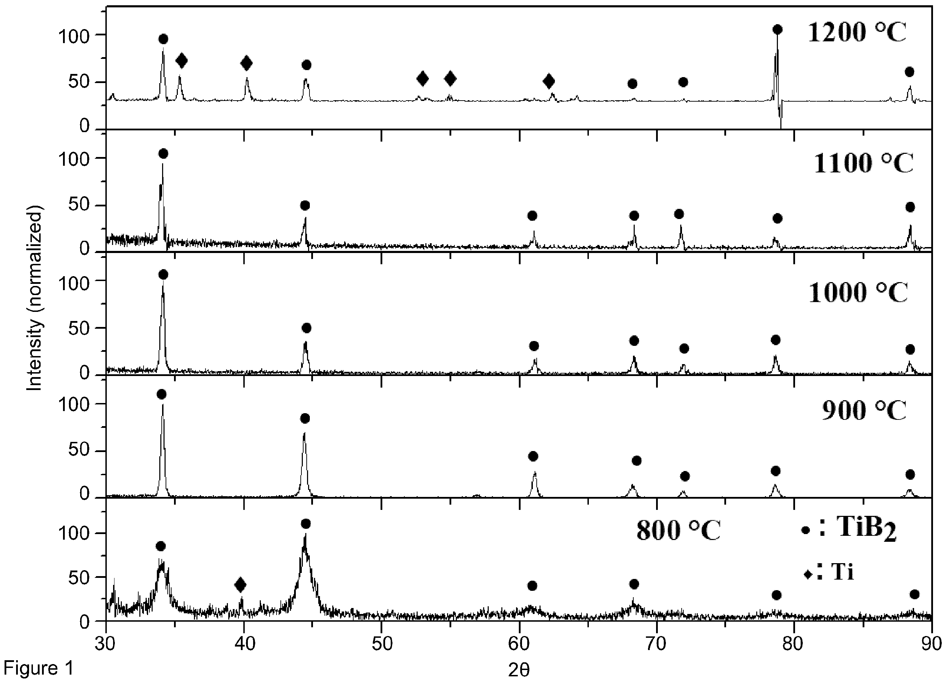

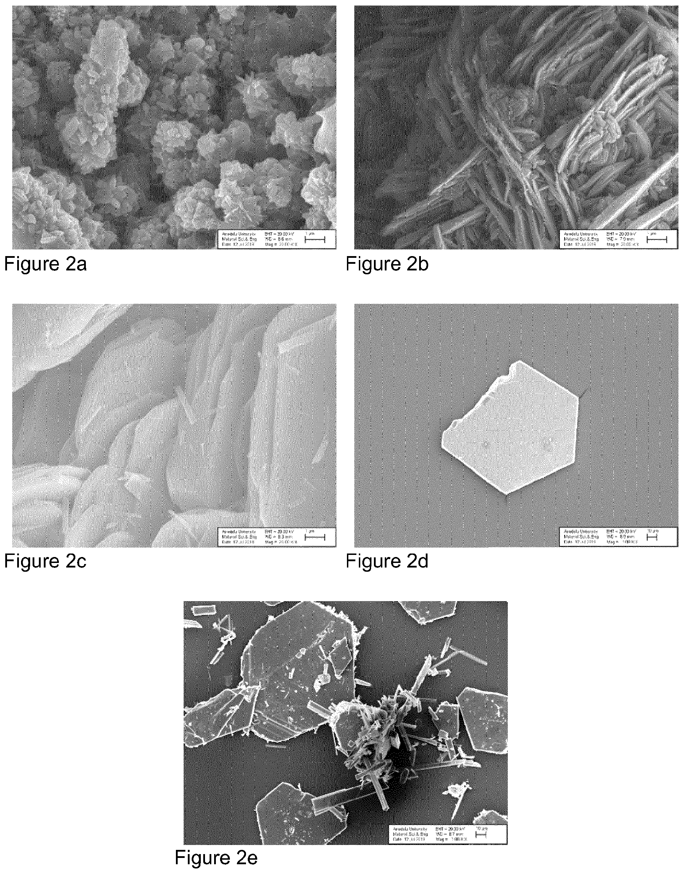

In the experiments, the mixtures were subjected to electrolysis for 20 minutes at temperatures different from each other at 100 °C intervals. In Figure 1 and Figure 2a-e, X-ray diffraction (XRD) graphs and scanning electron microscope (SEM) images of the TiB₂ powder samples obtained are given.

As can be seen in these experiments, the particle sizes and shapes of the obtained metal boride powders can be controlled by temperature, current density, concentration, and electrolyte composition. It is seen that with the temperature increasing, TiB₂ particles approximate a hexagonal shape, and their size is increased. Particles grow planarly, particularly below 1000 °C, and above 1000 °C their thickness is increased as well. The obtained particle sizes below 800 °C are in the order of nanometers.

Although in the exemplary embodiment of the invention, Na₂B₄O₇ is used, the electrolyte is also selected from other oxide salts consisting of ionic components having a low vapor pressure at the electrolysis temperature.

Electrolysis is carried out with a direct current. For that, different forms can be used such as constant or time-varying triangular current, square pulsed current (pulse current plating), interrupted current (PIC), and periodic reverse current (PRC).

The molten salts dissociate into their ions and the metal and boron are reduced together at the cathode, thereby forming the respective metal borides.

The method according to the invention does not lead to the formation of harmful gases since it allows to use of non-halide metal and boron sources. Also, the use of a protective atmosphere is not necessary because of the covering behavior of the molten electrolyte phase. Consequently, the method can be carried out in environments open to the atmosphere.

The anode may be selected from graphite, carbon, glassy carbon, the respective metal boride, or the respective metal. Electrolysis can be carried out in a pot that is made of these materials and also serves as an anode.

A solid or liquid cathode can be used.

Although metal and boron sources are selected from non-halide compounds, alkaline earth halides can be added as well, such as CaF₂ that is not subjected to thermal decomposition, as activators and to regulate electrolyte viscosity.

To the molten mixture, alkali metal oxides and hydroxides can also be added. These allow to regulate the pH value of the mixture. Thereby, the reduction of metal and boron can also be controlled.

Various different heating systems and methods can be used to achieve and maintain the electrolysis temperature, including an electric resistance furnace and systems providing indirect heating. In a preferred embodiment of the invention, an induction furnace is used to achieve the electrolysis temperature. The reason is that inductive heating increases the reaction rate by triggering the ion flow in the molten material. Heating can also be provided via the current flowing through the system.

The metal boride production method developed with the invention allows to synthesize the metal borides in powder form in different sizes on an industrial scale by using cost-effective electrolyte components.

## Claims

1. A metal boride production method by a cathodic reduction in a single process step using a boron source selected from borates of an alkali or alkaline earth metal and mixtures thereof, and a metal source selected from the oxides, sulphides, sulfates, nitrates, and borates or the carbonates, hydroxides, and nitrates that can form oxides formed from the metal compounds by thermal decomposition and mixtures thereof of the metal in the electrolyte, for the production of metal borides or mixed metal borides via molten salt electrolysis from an electrolyte composition containing the respective metals and boron source compounds, but not halides **characterized in that**; the metal is a transition group element and **in that**; a temperature from 800 to 1200 °C and a current density above 50 mA/cm² is applied.

2. The metal boride production method according to claim 1, **characterized in that**; sodium tetraborate of molar ratio 10-90%, titanium dioxide, zirconium dioxide or hafnium dioxide of molar ratio 1-50%, and sodium hydroxide of molar ratio 1-50%, are used.

3. The metal boride production method according to claim 1, **characterized in that**; the shapes and sizes of the metal boride powder particles are controlled by temperature, current density, and concentration.

4. The metal boride production method according to claim 1, **characterized in that**; a current density of 50 to 1000 mA/cm² is applied.
